# EUROPÄISCHE PATENTSCHRIFT

(11) **EP 2 254 743 B1**
(45) Veröffentlichungstag und Bekanntmachung des Hinweises auf die Patenterteilung: **25.06.2014**
(21) Anmeldenummer: 09713650.1
(22) Anmeldetag: 18.02.2009
(51) Int. Cl.: B29C 47/76, B29C 47/40, B29B 7/84

(54) **ENTGASUNGSEXTRUDER ZUM EXTRUDIEREN VON FORMMASSEN**
DEGASSING-EXTRUDER FOR EXTRUDING POLYMER MATERIAL
EXTRUDEUSE-DÉGAZEUSE POUR EXTRUDER MATIERE POLYMERE

(30) Priorität: 19.02.2008 DE 102008009735
(43) Veröffentlichungstag der Anmeldung: 01.12.2010
(73) Patentinhaber: Styrolution Group GmbH, 60325 Frankfurt am Main (DE)
(72) Erfinder: GÜNTHERBERG, Norbert, 67346 Speyer (DE); BARDON, Rainer, 67125 Dannstadt-Schauernheim (DE); HEINEN, Hartmut, 67067 Ludwigshafen (DE); SAUER, Michael, 68766 Hockenheim (DE)
(74) Vertreter: Jacobi, Markus Alexander
(86) Internationale Anmeldenummer: PCT/EP2009/051880
(87) Internationale Veröffentlichungsnummer: WO 2009/103714

(56) Entgegenhaltungen:
- EP-A1- 0 683 028
- WO-A1-2004/048070
- DE-A1-102005 051 959
- DE-C1- 10 020 646
- GB-A- 1 273 514
- JP-A- 53 149 261
- JP-A- 2004 025 669
- US-B1- 6 302 572

## Beschreibung

Die Erfindung betrifft eine Vorrichtung zum Extrudieren von Formmassen mit mindestens zwei in einem Gehäuse aufgenommenen Schnecken, umfassend mindestens eine Einzugszone, eine Umwandlungszone und eine Austragszone, wobei sich die Zonen zumindest teilweise überdecken können, sowie mindestens eine Entgasungsöffnung.

Formmassen, die durch Extrusion verarbeitet werden, sind im Allgemeinen hochmolekulare oder oligomere Verbindungen, die bei Erhöhung der Temperatur nach Überschreiten ihrer Glasübergangstemperatur weich werden. Hierunter können Kunststoffe oder Naturprodukte fallen.

Wenn in der Formmasse unerwünschte gasförmige Bestandteile, zum Beispiel Monomerreste oder Lösungsmittelreste, oder auch Wasser enthalten sind, ist es erforderlich, diese aus der Formmasse zu entfernen. Die hierzu notwendige Entgasung und Entwässerung mittels Schneckenmaschinen ist bekannt.

Zur Entgasung der Formmasse werden üblicherweise Entgasungsöffnungen eingesetzt. Hierzu sind im Gehäuse der Schneckenmaschine Öffnungen ausgebildet, durch die die gasförmigen Bestandteile entweichen können. Da die Formmasse jedoch im Allgemeinen unter Druck steht, werden durch die plötzliche Druckentlastung auch Teile der als Schmelze vorliegenden Formmasse mitgerissen. Die Schmelze wird dann in Form von Krümeln, Brocken, Schaum oder in der Entgasungsöffnung hochsteigender Schmelze dem Hauptstrom entzogen. Bei längerer Verweilzeit des Materials in den quasi nicht durchmischten Entgasungsdomen kann dies zu Abbau und Vercrackung führen, wodurch letztendlich ein verunreinigtes Produkt entsteht. Kritische Größe ist in diesem Zusammenhang die Gasgeschwindigkeit und die Geometrie der Entgasungsöffnung. Bei zu hoher Gasgeschwindigkeit werden Krümel und Schmelzebrocken mitgerissen und oft ausgetragen. Dies kann so weit führen, dass die Abgasleitungen verstopfen.

Um zu vermeiden, dass Krümel oder Schmelzebrocken mitgerissen werden, ist es zum Beispiel bekannt, Entgasungsöffnungen mit einer Metalldrahtgewebe-Verbundplatte abzudecken. Dies ist beispielsweise in EP-B 1 400 337 beschrieben. Diese schränken jedoch den freien Querschnitt ein und können bei hohen Gasgeschwindigkeiten beziehungsweise den dann auftretenden hohen Drücken mit Schmelze kontaminiert werden, wobei es zu Verstopfungen kommen kann. Zudem kann durch den zu geringen freien Querschnitt ein Teil des Wassers, Restmonomers oder Lösemittels im Produkt verbleiben und eine weitere Entgasungsstufe erforderlich machen.

Alternativ sind auch, insbesondere für Schneckenmaschinen mit zwei Schnecken, unterschiedliche Einsätze für Entgasungsöffnungen bekannt. Diese geben im Allgemeinen nur einen Teilbereich über den Schnecken frei. Der Teilbereich wird dabei in Abhängigkeit der eingesetzten Formmasse gewählt. So werden zum Beispiel bei Formmassen, die nicht an der Schnecke haften, Einsätze verwendet, bei denen die aufdrehende Schnecke und der Zwickel überdeckt sind und die zusätzlich eine Einzughilfe in Form eines Spaltes mit abnehmender Spaltweite in Rotationsrichtung der Schnecke, über der sich die Einzugsöffnung befindet, aufweisen.

Bei Polymerschmelzen, die nicht an der Schnecke haften, wird beispielsweise die Entgasungsöffnung so ausgebildet, dass die aufdrehende Schnecke und der Zwickel überdeckt sind. Zudem nimmt der Öffnungsquerschnitt nach außen hin, d. h. von den Schnecken weg, zu. Bei niederviskosen Polymerschmelzen, insbesondere im Rahmen der Lösungsmittelentgasung, werden Einsätze in der Entgasungsöffnung eingesetzt, bei denen die aufdrehende Schnecke nur teilweise überdeckt ist. Der Zwickel bleibt frei.

Die vorstehenden Einsätze für die Entgasungsöffnung werden bei Schneckenmaschinen mit zwei gleichsinnig drehenden Schnecken eingesetzt. Als aufdrehende Schnecke wird dabei die Schnecke bezeichnet, deren Rotationsbewegung von außen zur Mitte hin gerichtet ist. Als Zwickel wird der Eingreifbereich der beiden Schnecken bezeichnet.

Durch die Form der Entgasungsöffnung sollen Brocken wieder zurückfallen und eingezogen werden. Es hat sich jedoch gezeigt, dass bei laufendem Betrieb die Schmelze häufig in der Entgasungsöffnung hochsteigt und nicht wieder mitgenommen wird. Dies macht häufige Reinigungsoperationen notwendig.

Aufgabe der vorliegenden Erfindung ist es, eine Vorrichtung zum Extrudieren von Formmassen bereitzustellen, mit der eine Entgasung der Formmasse bei hohem Durchsatz möglich ist und eventuell beim Entgasen mitgerissene Anteile der Formmasse weitertransportiert werden.

Gelöst wird die Aufgabe durch eine Vorrichtung zum Extrudieren von Formmassen mit mindestens zwei in einem Gehäuse aufgenommenen Schnecken, umfassend mindestens eine Einzugszone, eine Umwandlungszone und eine Austragszone, wobei sich die Zonen zumindest teilweise überdecken können, sowie mindestens eine Entgasungsöffnung. Die Entgasungsöffnung spart einen Teilbereich im Gehäuse über mindestens zwei ineinander eingreifenden Schnecken aus und jeweils im Eingreifbereich der Schnecken ist ein Steg in der Entgasungsöffnung ausgebildet. Zwischen der mindestens einen Schnecke, die im Bereich der Entgasungsöffnung in Richtung zum Steg hin rotiert, und im Steg ist ein Spalt ausgebildet, dessen Spaltweite in Rotationsrichtung der Schnecke abnimmt.

Durch die erfindungsgemäße Entgasungsöffnung, die Teilbereiche über zwei Schnecken der Schneckenmaschine mit mindestens zwei Schnecken freigibt, ist aufgrund des größeren Entgasungsquerschnittes eine bessere Entgasung möglich als bei den aus dem Stand der Technik bekannten Einsätzen. Zudem wird durch den Spalt zwischen dem Steg und der Schnecke, der in Rotationsrichtung der Schnecke hin abnimmt, Material, das zunächst mit dem Gasstrom mitgerissen wird und zurückfällt, nicht aufgestaut, sondern mit der Schnecke weitertransportiert. Hierdurch wird unter anderem vermieden, dass Teile der Formmasse im Bereich der Entgasungsöffnung anbacken und so zu Verunreinigungen beitragen.

Als Formmassen, die in der erfindungsgemäßen Vorrichtung extrudiert werden, können alle hochmolekularen oder oligomeren Verbindungen verwendet werden, die bei Erhöhung der Temperatur nach Überschreiten ihrer Glasübergangstemperatur weich werden. Hierunter können Kunststoffe oder Naturprodukte fallen. Derartige Formmassen sind dem Fachmann bekannt. Geeignete Formmassen sind zum Beispiel alle thermoplastisch verarbeitbaren Polymere. So sind zum Beispiel Polyamide, Polycarbonate, Styrolpolymere, Derivate, Copolymere oder Mischungen dieser Polymere geeignet. Zu den Styrolcopolymeren zählen zum Beispiel Styrol/Acrylnitrilcopolymere, oft auch als SAN-Polymere bezeichnet, kautschukmodifizierte Styrolcopolymere, wie Acrylnitril/Butadien/Styrolcopolymere, oft auch als ABS bezeichnet, Acrylnitril/Acrylat/Styrolcopolymere, oft auch als ASA bezeichnet. Daneben kommen auch Derivate oder Varianten von SAN-Polymeren, ABS oder ASA in Betracht, wie solche auf Basis von α-Methylstyrol oder Methacrylat, oder solche, die weitere Monomere umfassen, beispielsweise das sogenannte MABS. Selbstverständlich können auch Mischungen von zwei oder mehreren unterschiedlichen Styrolcopolymerisaten eingesetzt werden. Des Weiteren kommen kautschukmodifizierte Styrolcopolymere in Betracht, die ganz oder teilweise auf anderen Kautschuken basieren, wie Ethylen-Butadienkautschuken oder Siliconkautschuken. Bevorzugt werden auch Mischungen der genannten Polymere mit Polyamiden, Polyestern, wie beispielsweise Polybutylentherephthalaten und/oder Polycarbonaten.

Als erfindungsgemäße Vorrichtung ist an sich jede Schneckenmaschine geeignet, die mindestens eine Entgasungsöffnung umfasst und mittels derer Formmassen extrudiert werden können. Hierunter sollen auch Schneckenmaschinen verstanden werden, die in der Verarbeitung, wie dem Spritzguss, eingesetzt werden. Schneckenmaschinen an sich sind bekannt, so dass hier auf die allgemein zugängliche Literatur verwiesen werden kann. Im Allgemeinen umfassen Schneckenmaschinen mindestens eine Einzugszone, mindestens eine Umwandlungszone und mindestens eine Austragszone. Zudem umfasst eine erfindungsgemäß ausgebildete Schneckenmaschine mindestens eine Entgasungszone.

Im Allgemeinen richtet sich die Anzahl, Anordnung und Ausgestaltung der Entgasungsöffnungen nach der Menge des Gases, das die Schneckenmaschine verlassen soll. Beispielsweise richtet sich die Anzahl, Anordnung und Geometrie der Entgasungsöffnungen bei der Extrusion Wasser enthaltender Formmassen nach dem Wassergehalt der Formmasse und dem gewünschten Restwassergehalt des Endproduktes.

Erfindungsgemäß weisen die Schneckenmaschinen mindestens eine Entgasungsöffnung auf. Sie können aber auch mehrere Entgasungsöffnungen aufweisen. Beispielsweise können sie zwei oder drei Entgasungsöffnungen umfassen. Es ist aber auch möglich, dass die Schneckenmaschinen sehr viel mehr, beispielsweise bis zu 30, Entgasungsöffnungen aufweisen.

Die Entgasungsöffnungen können sich an der Oberseite des Gehäuses der Schneckenmaschine befinden. Sie können aber auch eine seitliche Anordnung haben. Auch ist es zum Beispiel möglich, die Entgasungsöffnungen paarweise gegenüberliegend seitlich anzuordnen. Ferner kann eine Kombination der genannten Anordnungen in Betracht kommen. Beispielsweise können die Entgasungsöffnungen jeweils einzeln nebeneinander liegend oder übereinander liegend angeordnet sein. Es kommt jedoch auch in Betracht, dass mehrere Entgasungsöffnungen nebeneinander liegend oder übereinander liegend angeordnet sind. Beispielsweise ist eine oben liegende und an gleicher Stelle oder räumlich versetzt eine nach unten offene Entgasungsöffnung denkbar.

Die Anzahl und die Position der Entgasungsöffnungen richtet sich unter anderem nach den jeweiligen Aufgaben sowie den Eigenschaften der Polymerschmelze.

In der Regel erfolgt die Entgasung mit der Förderrichtung stromabwärts von der Einzugszone bzw. der Einzugs- und der Umwandlungszone, d. h. vorwärts. Die Entgasung kann aber auch entgegen der Förderrichtung stromaufwärts, d. h. rückwärts zur Einzugszone erfolgen. Im einfachsten Fall liegt nur eine Entgasungsöffnung vor, die stromauf oder stromab einer Einzugszone angeordnet sein kann. Falls es mehrere Einzugszonen gibt, kann die Entgasung stromauf oder stromab zu jeder dieser Einzugszonen erfolgen.

Die Entgasungsöffnungen können in ihrer Geometrie bekannten Öffnungen entsprechen, wie sie üblicherweise zum Entfernen gasförmiger Stoffe aus einem Extruder verwendet werden. So können Entgasungsöffnungen verwendet werden, die Aussparungen und/oder Bohrungen im Gehäuse der Schneckenmaschine sind. Als Entgasungsöffnungen sind beispielsweise kreisförmige Bohrungen oder Bohrungen in Form einer liegenden Acht, die durch zwei direkt nebeneinander liegende kreisförmige Bohrungen gebildet wird, geeignet, wobei die Längsachse der liegenden Acht beispielsweise recht-winklig, d. h. quer, oder parallel, d. h. längs, zur Förderrichtung der Schneckenmaschine angeordnet sein kann. Bevorzugt sind die Entgasungsöffnungen jedoch rechteckig, quadratisch oder oval. Die quadratischen oder rechteckigen Öffnungen können dabei mit abgerundeten Ecken ausgeführt sein. Sofern mehr als eine Entgasungsöffnung verwendet wird, ist es auch möglich, dass deren Geometrien unterschiedlich sind. Besonders bevorzugt sind die rechteckigen oder ovalen Entgasungsöffnungen so angeordnet, dass deren längere Seite parallel zur Achse des Extruders liegt.

Erfindungsgemäß spart die Entgasungsöffnung einen Teilbereich im Gehäuse über mindestens zwei ineinander eingreifenden Schnecken aus. Im Eingreifbereich der Schnecken ist ein Steg in der Entgasungsöffnung ausgebildet, wobei zwischen der mindestens einen Schnecke, die im Bereich der Entgasungsöffnung in Richtung zum Steg hin rotiert, und dem Steg ein Spalt ausgebildet ist, dessen Spaltweite in Rotationsrichtung der Schnecke abnimmt.

Sofern die Vorrichtung mehr als eine Entgasungsöffnung aufweist, ist mindestens eine davon mit dem Steg ausgerüstet. In einer bevorzugten Ausführungsform sind alle Entgasungsöffnungen auf diese Weise ausgerüstet. Bei mehr als zwei Entgasungsöffnungen können einige Entgasungsöffnungen mit Steg ausgerüstet und die restlichen Entgasungsöffnungen entweder offen oder zum Beispiel auch mit anderen Vorrichtungen versehen sein, die ein Austreten der Fördermasse verhindern. Als solche kann zum Beispiel auch eine Rückhalteschnecke dienen. So ist es zum Beispiel möglich, die Entgasungsöffnung oder die Entgasungsöffnungen, an denen die Gasaustrittsgeschwindigkeit am größten ist, jeweils mit dem Steg auszurüsten, während die Entgasungsöffnung oder die Entgasungsöffnungen, an denen nur wenig Fördergut austritt, offen sein können oder beispielsweise auch mit Metalldrahtgewebeverbundplatten abgedeckt sein können.

Die Befestigung des Steges kann durch jedes beliebige kraftschlüssige oder formschlüssige Verfahren erfolgen. So ist es zum Beispiel möglich, den Steg in der Entgasungsöffnung mit Hilfe von Schrauben oder Nieten zu befestigen. Weiterhin kann der Steg auch eingeschweißt oder gelötet werden. Die Art der Befestigung ist dabei vom Material abhängig. Besonders bevorzugt wird die Entgasungsöffnung jedoch mit einem Rahmen versehen, wobei der Steg im Rahmen befestigt ist. Hierbei ist es möglich, den Rahmen und den Steg einstückig zu fertigen. Zur Herstellung des mit dem Rahmen verbundenen Steges eignen sich zum Beispiel Gießverfahren oder, wenn der Rahmen und der Steg aus einem Metall gefertigt sind, auch Schmiedeverfahren.

Unter Einzugszone ist erfindungsgemäß eine Zone der Schneckenmaschine zu verstehen, der die Formmasse oder zumindest einzelne Komponenten der Formmasse zudosiert werden. Hierzu weist die Einzugszone im Allgemeinen eine Einfüllöffnung auf. Die Einfüllöffnung kann mit einer Dosiereinrichtung versehen sein. Die Dosiereinrichtung kann zum Beispiel eine Förderschnecke sein, die die zuzugebenden Komponenten der Formmasse in die Einfüllöffnung fördert oder drückt. Weiterhin ist es auch möglich, dass eine volumetrische oder gravimetrische Dosiereinrichtung eingesetzt wird und die zuzugebenden Komponenten im freien Fall in die Einzugsöffnungen der Schneckenmaschine dosiert werden. Im Allgemeinen erfolgt die Zugabe der Formmasse oder von Komponenten der Formmasse als Feststoff, insbesondere als Granulat. Es ist jedoch auch möglich, die Formmasse oder Komponenten der Formmasse bereits in geschmolzenem Zustand zuzuführen. Im Allgemeinen wird das Material in der Einzugszone aufgenommen, gefördert und verdichtet. Zudem kann gegebenenfalls auch eine Vorwärmung erfolgen.

In der Umwandlungszone erfolgt im Allgemeinen das Aufschmelzen und Homogenisieren der Formmasse. Wenn bereits eine Schmelze zugegeben wird, wird die Formmasse in der Umwandlungszone nur aufgeschmolzen. Gleichzeitig baut sich in der Umwandlungszone ein Druck auf.

In der Austragszone erfolgt ein Homogenisieren der als Schmelze vorliegenden Formmasse. Hierzu werden gegebenenfalls in der Formmasse enthaltene Agglomerate zerteilt bzw. Reste von Feststoffpartikeln werden aufgeschmolzen. Weiterhin erfolgt ein gleichmäßiges Verteilen von Stoffkomponenten. Hierunter fallen zum Beispiel Additive, wie Pigmente. Zudem wird die Temperatur der Schmelze vereinheitlicht. Auch wird in der Austragszone der für die Extrusion durch ein Extrusionswerkzeug erforderliche Druck aufgebaut.

Wenn die Formmasse mehrere Komponenten umfasst, so ist es möglich, diese gemeinsam zuzugeben. Auch ist es möglich, die Komponenten jeweils getrennt zuzugeben. Neben der Zugabe aller Komponenten gemeinsam und der getrennten Zugabe der Komponenten ist es auch möglich, jeweils mindestens zwei Komponenten gemeinsam zuzugeben und die übrigen Komponenten einzeln oder ebenfalls gemeinsam. Die Zugabe kann dabei über mehrere nebeneinander oder hintereinander liegende Einfüllöffnungen in der Einzugszone erfolgen oder es sind mehrere Einzugszonen vorgesehen. Hierbei ist es möglich, dass die Einzugszonen von Umwandlungszonen unterbrochen sind.

Insbesondere bei einer Schneckenmaschine mit gleichsinnig rotierenden Schnecken ist zwischen dem Steg und einer Schnecke, die im Bereich der Entgasungsöffnung vom Steg weg rotiert, ein Spalt mit einer konstanten Spaltweite ausgebildet. Die Spaltweite entspricht dabei vorzugsweise dem Spalt, der zwischen dem Gehäuse und den Schnecken ausgebildet ist. Durch die konstante Spaltweite wird ein gleichmäßiger Transport der Formmasse ermöglicht. Der Transport erfolgt hierbei im Allgemeinen unter einem leichten Überdruck, so dass bei Erreichen der Entgasungsöffnung, sobald der Steg passiert ist, erneut ein leichter Druckabfall erfolgt und die Formmasse weiter ausgast. Um zu vermeiden, dass bei gleichsinnig rotierenden Schnecken in der Entgasungsöffnung nach dem Passieren des Steges Material anbackt und möglicherweise abgebaut wird und vercrackt, ist es bevorzugt, wenn bei gleichsinnig rotierenden Schnecken auch am Randbereich der Entgasungsöffnung im Bereich der Schnecke, die zum Randbereich der Entgasungsöffnung hin rotiert, ein Spalt ausgebildet ist, dessen Spaltweite in Rotationsrichtung der Schnecke abnimmt. Durch die abnehmende Spaltweite wird das entgaste Material wieder aufgefangen und im Spalt komprimiert. Insbesondere wird hierdurch ein Aufstauen des Materials im Bereich der Entgasungsöffnung vermieden.

Damit am Steg keine Formmasse aufgestaut wird und hierdurch am Steg anbacken kann, überdeckt der Steg auf der Seite mit abnehmender Spaltweite vorzugsweise mindestens 30 Prozent der Schnecke. Durch die Überdeckung kann der Spalt in Umfangsrichtung der Schnecke ausreichend lang ausgebildet werden, um das in der Entgasungsöffnung vor dem Steg entgaste Material aufzufangen und erneut zu komprimieren, um das Aufstauen des Materials zu vermeiden.

Wenn in der Schneckenmaschine gegensinnig rotierende Schnecken eingesetzt werden, die im Bereich der Entgasungsöffnung jeweils in Richtung zum Steg hin rotieren, ist der Steg vorzugsweise symmetrisch mit jeweils abnehmender Spaltweite zur Stegmitte hin ausgebildet. Hierdurch wird das auf beiden Seiten zum Steg hin transportierte Material der Formmasse durch den Spalt mit zunächst großer Spaltweite aufgenommen, im Spalt komprimiert und dann zwischen den Schnecken hindurchtransportiert. Auch in diesem Fall wird vermieden, dass sich das in der Schneckenmaschine plastifizierte Material der Formmasse in der Entgasungsöffnung aufstaut und dort vercracken kann, wodurch die Formmasse verunreinigt wird.

In einer bevorzugten Ausführungsform nimmt die Breite des Steges nach außen hin ab, so dass der Öffnungsquerschnitt der Entgasungsöffnung zunimmt. Nach außen hin, im Sinne der vorliegenden Erfindung, bedeutet von den Schnecken weg. Durch die Zunahme des Öffnungsquerschnittes wird ein Druckaufbau in der Entgasungsöffnung, der ein Entgasen der Formmasse erschweren würde, vermieden. Ein leichteres Entweichen des Gases wird auf diese Weise gewährleistet. Durch die Erweiterung des Strömungsquerschnittes wird die Gasgeschwindigkeit gesenkt, wodurch weniger Feststoff mitgerissen wird.

Damit außerhalb der Entgasungsöffnung im Bereich des Gehäuses kein Druckabfall erfolgt und ein gleichmäßiger Transport der Formmasse ermöglicht wird, ist es bevorzugt, wenn der Randbereich der Entgasungsöffnung im Bereich der Schnecke, die vom Randbereich wegrotiert, mit einer konstanten Spaltweite ausgebildet ist. Durch die konstante Spaltweite erfährt die Formmasse, sobald diese in den Bereich der Entgasungsöffnung gelangt, eine plötzliche Druckerniedrigung, wodurch das Entgasen erleichtert wird.

In einer bevorzugten Ausführungsform ist die Entgasungsöffnung durch einen Dom abgedeckt. Im Dom erfolgt im Allgemeinen eine Umlenkung des Gasstromes. Mit dem Gasstrom mitgerissene Partikel werden im Allgemeinen gegen den Deckel des Doms geschleudert und fallen anschließend zurück in die Entgasungsöffnung oder bleiben am Deckel des Doms kleben. Durch den Spalt mit abnehmender Spaltweite werden diese Partikel mit der Formmasse wieder mitgeführt und kleben nicht an der Entgasungsöffnung an. Auch ist durch die erfindungsgemäße Form der Entgasungsöffnung, die gegenüber herkömmlichen Einsätzen einen größeren freien Querschnitt ermöglicht, der Anteil an mitgerissenen Polymerpartikeln deutlich reduziert, so dass der Dom weitgehend sauber bleibt. Zudem ermöglicht es der Dom, zum Beispiel eine Abgasleitung anzuschließen, mit der das an der Entgasungsöffnung ausgetragene Gas aufgefangen und gesammelt werden kann. Dies ist insbesondere dann bevorzugt, wenn zum Beispiel Restmonomer oder Lösungsmittelreste aus der Formmasse entfernt werden. Wenn die Formmasse lediglich entwässert wird, insbesondere wenn das an der Entgasungsöffnung entfernte Gas Wasserdampf ist, so ist es nicht notwendig, diesen zu sammeln und zu entsorgen, da Wasserdampf im Allgemeinen für die Umgebung unschädlich ist. Insbesondere, wenn jedoch zusätzlich zum Wasserdampf noch Monomer oder Lösungsmittelreste enthalten sind, ist es bevorzugt, diese zu sammeln und gegebenenfalls nach einer entsprechenden Abgasreinigung über einen Abzug abzuführen beziehungsweise zu kondensieren und über die Abwasseraufbereitung zu entsorgen.

Als Material für den Steg, der in der Entgasungsöffnung aufgenommen ist, eignen sich im Allgemeinen alle Materialien, aus denen eine Schneckenmaschine gefertigt werden jedoch auch möglich, den Steg zum Beispiel aus einem Kunststoff oder einer Keramik zu fertigen. Auch können Nichteisenmetalle eingesetzt werden.

Im Allgemeinen wird die Entgasungsöffnung von einem Rahmen umschlossen. In diesem Fall ist der Steg mit dem Rahmen verbunden, so dass der Rahmen samt Steg in die Entgasungsöffnung eingesetzt werden kann. Wenn der Steg mit einem Rahmen verbunden ist, so werden vorzugsweise Steg und Rahmen aus dem gleichen Material gefertigt. Hierzu eignen sich ebenfalls metallische Werkstoffe, Kunststoffe oder Keramik. Bevorzugt als Werkstoff sind jedoch metallische Werkstoffe, insbesondere Eisenwerkstoffe.

Um zu vermeiden, dass Formmasse am Rahmen bzw. am Steg anbackt, ist es bevorzugt, wenn der Steg eine Oberfläche aufweist, an der die Formmasse nicht haftet. Geeignete Materialien für die Oberfläche sind zum Beispiel Polytetrafluorethylen, fluoriertes Polyethylen, Polyetheretherketon (PEEK), Polysulfon sowie Mischungen daraus und korrosionsfeste Metalllegierungen, falls die Aufgabenstellung es erfordert.

Bevorzugt ist es, wenn das Material für die Oberfläche des Steges als Beschichtung aufgebracht ist. Wenn der Steg mit einem Rahmen verbunden ist, ist es bevorzugt, sowohl den Steg als auch den Rahmen, der die Entgasungsöffnung umschließt, mit der Oberfläche aus dem Material, an dem die Formmasse nicht haftet, zu versehen. Dabei sind durchaus Kombinationen aus Eisenmetall und anderen Werkstoffen möglich.

Die Vorrichtung zum Extrudieren von Formmassen ist im Allgemeinen ein Zweischneckenextruder. Jedoch kann auch ein Extruder mit drei oder mehr Schnecken, beispielsweise bis zu 20 Schnecken, oder auch ein Extruder mit einer Hauptschnecke mit großem Durchmesser und darum herum angeordneten kleinen Schnecken, eine so genannte Planeten-Anordnung, verwendet werden.

Weiterhin rotieren die Schnecken des Extruders bevorzugt gleichsinnig. Jedoch ist auch eine gegensinnige Rotation möglich. Besonders bevorzugt wird jedoch ein Zweischneckenextruder mit gleichsinnig rotierenden Schnecken eingesetzt.

Die erfindungsgemäße Vorrichtung eignet sich insbesondere zur Herstellung von schlagzäh modifizierten Thermoplasten oder schlagzäh modifizierte Thermoplaste enthaltenden Polymerblends, die durch Vermischen mindestens einer wasserfeuchten, bis zu 60 Gew.-% Restwasser enthaltenden Elastomerkomponente A mit mindestens einem thermoplastischen Polymeren B sowie weiteren Polymeren C und Zusatzstoffen D in einer Schneckenmaschine unter mechanischer Entwässerung der Elastomerkomponente A hergestellt werden.

Die wasserfeuchte, bis zu 60 Gew.-% Restwasser enthaltende Elastomerkomponente A ist in der Regel ein feuchter Feststoff. Es handelt sich beispielsweise um einen Pfropfkautschuk, der durch Emulsionspolymerisation gewonnen, ausgefällt und auf bis zu 60 Gew.-% Restwassergehalt teilentwässert wurde, wobei die Teilentwässerung zum Beispiel durch Filtrieren, Sedimentieren, Auspressen, Dekantieren, Zentrifugieren oder thermische Trocknung erfolgen kann. Die Elastomerkomponente A wird der Einzugszone des Extruders zugeführt. Diese besteht üblicherweise aus einer automatisch arbeitenden Dosiereinrichtung und der eigentlichen Einfüllöffnung. Die Dosiereinrichtung ist beispielsweise als Förderschnecke ausgebildet, die das Fördergut in die Dosieröffnung fördert oder drückt. Ebenso ist denkbar, dass die Komponente A durch geeignete gravimetrische oder volumetrische Dosiereinrichtungen dosiert und im freien Fall in die Einzugsöffnung des Extruders dosiert wird. Mittels einer geeigneten Schneckengeometrie im Dosierabschnitt wird erreicht, dass die Komponente A eingezogen und entlüftet wird. Die Entlüftung kann durch eine oder mehrere, stromauf oder stromab zur Einzugsöffnung angeordnete Öffnungen erfolgen, die entweder unverschlossen sind oder einen erfindungsgemäß ausgebildeten Steg aufweisen.

Im Falle mehrerer Elastomerkomponenten A können diese gemeinsam oder getrennt voneinander in die gleiche Einzugsöffnung oder in verschiedene Einzugsöffnungen der Einzugszone dosiert werden.

Die Komponente C und/oder die Komponente D bzw. Anteile der insgesamt zugegebenen Menge der Komponenten C und/oder D werden zum Beispiel in eine oder mehrere weitere, bevorzugt am Entlüftungsabschnitt angeordnete Öffnungen, eindosiert. Wenn beide Komponenten C und D zugeführt werden, so kann dies gemeinsam durch eine Öffnung oder durch verschiedene Öffnungen, zum Beispiel je eine für C bzw. D, geschehen.

In einer anderen, bevorzugten Ausführungsform wird in die Einfüllöffnung der Einzugszone oder in eine oder mehrere weitere, im Bereich der Einzugszone angeordnete Öffnungen, die Komponente C und/oder die Komponente D, bzw. Anteile der insgesamt zugegebenen Menge der Komponenten C und/oder D, eindosiert. Dies kann auch in einer weiteren Einzugszone erfolgen, die der ersten Einzugszone nachfolgt, und für die im Wesentlichen die zur Einzugszone gemachten Ausführungen gelten. Die Einzugszone und/oder die weiteren Einzugszonen können erfindungsgemäß mit einer oder mehreren Entwässerungsöffnungen ausgestattet sein, die ebenfalls bevorzugt der Drainage dienen.

Die Dosierungseinrichtung für die Komponenten C und/oder D kann je nach Aggregatzustand von C und D beispielsweise eine Förderschnecke wie bei der Dosierung der Elastomerkomponente A, eine Pumpe oder auch ein Extruder sein.

Im Bereich der Einzugszonen und - sofern vorhanden - im Entlüftungsabschnitt sind die Extruderschnecken in der Regel als übliche Förderschnecken ausgebildet. Übliche Förderschnecken im Sinne dieser Anmeldung sind Elemente mit "Erdmenger"-Profil, d. h. vollständig selbstreinigend, Schubkantenelemente, Elemente mit Trapezprofil und Elemente mit Rechteckprofil, Schneckenelemente mit Fördergewinden großer Steigung, d. h. Steigung größer als ein Schneckendurchmesser, in Förderrichtung, sogenannte LGS-Elemente, oder Kombinationen dieser Elemente, wobei die Schnecken auch abweichend von der Gangzahl des Abquetschteils mit geringerer oder höherer Gangzahl ausgestattet sein können. Hier können auch zwei- und eingängige oder zwei- oder dreigängige Schneckenelemente gemeinsam zur Anwendung kommen. Die Schneckenelemente der Förderschnecke können in den genannten Abschnitten gleich oder verschieden sein.

Die wasserfeuchte Elastomerkomponente wird stromabwärts in einen ersten Abquetschabschnitt geförder. Im ersten Abquetschabschnitt wird ein Teil es in der Elastomerkomponente enthaltenen Restwassers mechanisch entfernt. Hierzu wird das Material beispielsweise gegen ein als Hindernis wirkendes Stauelement gefördert, das sich in der Regel am Ende des Abquetschabschnittes befindet. Hierdurch wird ein Druck aufgebaut, der das Wasser aus der Elastomerkomponente auspresst. Man kann den Druck je nach dem rheologischen Verhalten des Kautschuks durch unterschiedliche Anordnung von Schnecken-, Knetelementen oder anderen Stauelementen aufbaüen. Grundsätzlich sind alle handelsüblichen, dem Druckaufbau dienenden Vorrichtungselemente geeignet.

Als Stauelemente eignen sich beispielsweise überschobene, fördernde Schneckenelemente, Schneckenelemente mit Steigung entgegen der Förderrichtung, wozu auch Schneckenelemente mit Fördergewinden großer Steigung entgegen der Förderrichtung, sogenannte LGS-Elemente, zählen, Knetblöcke mit nicht fördernden Knetscheiben in unterschiedlicher Breite, Knetblöcke mit rückfördernder Steigung, Knetblöcke mit fördernder Steigung, Zylinderscheiben, Exzenterscheiben und daraus konfigurierte Blöcke, Zahnmischelemente verschiedener Bauart, neutrale Stauscheiben oder mechanisch verstellbare Drosseln, wie Schiebegehäuse, Radialdrosseln oder Zentraldrosseln. Es können auch zwei oder mehrere der Stauelemente miteinander kombiniert werden. Gleichfalls kann die Stauwirkung durch die Länge und die Intensität der einzelnen Stauelemente dem jeweiligen Elastomeren angepasst werden. Im Abquetschabschnitt sind die Schneckenelemente, die sich vor der Stauzone, d. h. vor dem ersten Stauelement, befinden, in der Regel als übliche Förderschnecken ausgebildet. In einer Ausführungsform werden hier Förderschnecken verwendet, deren Steigungswinkel in Richtung auf die Stauzone flacher wird. Diese Ausgestaltung bewirkt einen vergleichsweise langsamen Druckaufbau, wie er zur Entwässerung bestimmter Elastomerkomponenten vorteilhaft sein kann. Hierbei spricht man von einer Kompressionszone.

In einer anderen bevorzugten Ausführungsform werden im Abquetschabschnitt zwischen der Entwässerungsöffnung und dem ersten Stauelement Durchmischelemente und/oder Knetelemente eingesetzt. Diese Ausführungsform kann insbesondere für bestimmte Konsistenzen und Morphologien der Elastomerkomponente vorteilhaft sein.

Die konstruktiven Merkmale und alle Betriebsparameter des Extruders sind im ersten Abquetschabschnitt bevorzugt derart aufeinander abgestimmt, dass bei der gewählten Schneckendrehzahl das Elastomermaterial zwar gefördert und komprimiert, jedoch nicht oder lediglich im untergeordneten Maße plastifiziert oder angeschmolzen und nicht aufgeschmolzen wird.

Bevorzugt enthält der Abquetschabschnitt des Extruders zum Druckaufbau Schneekenelemente mit einer Steigung entgegen der Förderrichtung und/oder entsprechende Knetblöcke.

Das im Abquetschabschnitt aus dem Elastomermaterial ausgepresste Wasser verlässt den Extruder in flüssiger Phase und nicht als Dampf. In einer weniger bevorzugten Ausführungsform treten bis zu 20 Gew.-% des in diesem Abschnitt entfernten Wassers als Dampf aus.

Zur weiteren Entwässerung des Elastomermaterials ist es möglich, dass dem ersten Abquetschabschnitt mindestens ein weiterer Abquetschabschnitt folgt.

Neben der hier beschriebenen Ausführungsform eines Abquetschabschnittes ist auch jede beliebige weitere, dem Fachmann bekannte Geometrie zum Entwässern des Elastomermaterials einsetzbar. Geeignete Abquetsch- bzw. Entwässerungsabschnitte sind zum Beispiel in EP-B 1 400 337 beschrieben.

Nach dem Passieren des letzten Abquetschabschnittes ist die Elastomerkomponente A von einem erheblichen Teil des Restwassers befreit und gelangt in einen Zuführabschnitt, in dem sich eine oder mehrere Zufuhröffnungen für das thermoplastische Polymere B befinden. Vorteilhaft ist, dass das Polymere B in Form seiner Schmelze zugeführt wird. Wenn der Abschnitt mehrere Zufuhröffnungen enthält, so können diese zum Beispiel hintereinander entlang einer gedachten Achse in Längsrichtung des Extruders, Beispiel hintereinander entlang einer gedachten Achse in Längsrichtung des Extruders, kreisförmig entlang des Extruderumfanges oder entlang einer imaginären Helix um den Extruder herum angeordnet sein.

Die Zufuhr der Schmelze des Polymeren B kann zum Beispiel mittels eines Extruders oder mittels Fördereinrichtungen, wie Schmelzpumpen oder Dosierschnecken erfolgen.

Außer der Schmelze des thermoplastischen Polymeren B können im Zuführabschnitt auch die Komponente C und/oder die Komponente B bzw. Anteile der insgesamt zugegebenen Menge der Komponenten C und/oder D in den Extruder eingeführt werden. Diese Komponenten können aber als Schmelze bzw. Flüssigkeit vorliegen und werden in diesem Falle in der Regel mit Dosiereinrichtungen, wie sie auch zur Zufuhr der Schmelze des Polymeren B verwendet werden, oder, falls die Komponente flüssig ist, mit einer Flüssigkeitspumpe zudosiert. Im Falle fester Komponenten C und/oder D erfolgt die Dosierung üblicherweise wie bei Komponente A beschrieben.

An den die Thermoplastschmelze B sowie gegebenenfalls die Bestandteile C und/oder D zuführenden Abschnitt schließt sich im Allgemeinen eine Umwandlungszone an, die mit Durchmischungs-, Knet- und/oder anderen Plastifizierungselementen versehen ist. Die Durchmischungs- und/oder Knetelemente homogenisieren die Polymermischung unter gleichzeitigem Aufschmelzen der entwässerten Elastomerkomponente A sowie gegebenenfalls der Komponenten C und/oder D.

Als Durchmischungs- und Knetelement kommen die dem Fachmann geläufigen Bauteile in Betracht. Geeignete Bauteile sind zum Beispiel Schneckenelemente mit geringer Steigung in Förderrichtung, Knetblöcke mit schmalen oder breiten, fördernden oder nicht fördernden Knetscheiben, Schneckenelemente mit einer Steigung entgegen der Förderrichtung, Zylinderscheiben, Exzenterscheiben und Blöcke, die diese Scheiben enthalten, Zahnmischelemente oder Schmelzmischelemente oder eine Kombination solcher Elemente. Es können auch die für die Stauelemente beispielhaft genannten Schneckenelemente verwendet werden, da im Allgemeinen jedes Stauelement auch durchmischend wirkt. Bevorzugt werden zur Plastifizierung als Durchmischungs- und Knetelemente verschiedene Kombinationen von Knetblöcken eingesetzt. Auch Drosselscheiben können vorteilhaft verwendet werden. Alle genannten Elemente können als Normalausführung entsprechend dem Durchmesser des Extrudergehäuses oder auch als spezielle Ausführung mit verringertem Durchmesser Anwendung finden.

Die erfindungsgemäße Vorrichtung zum Extrudieren von Formmassen weist einen oder mehrere Entgasungsabschnitte auf, die jeweils mit einer oder mehreren Entgasungsöffnungen versehen sind. In den Entgasungsabschnitten wird das verbliebene Restwasser, das in den Abquetschabschnitten noch nicht mechanisch entfernt wurde, teilweise oder vollständig entfernt. Entgasungsabschnitte können vor dem Zufuhrabschnitt des thermoplastischen Polymeren B liegen. Sie können auch dahinter, d. h. stromabwärts, angeordnet sein. Zudem ist es möglich, dass ein Entgasungsabschnitt vor und ein Entgasungsabschnitt hinter dem Zuführungsabschnitt der Komponente B angeordnet ist. Weiterhin ist es auch möglich, einen oder mehrere Entgasungsabschnitte zwischen mindestens zwei Zuführabschnitten anzuordnen. Die Anordnung der Entgasungsabschnitte und Zuführungsabschnitte kann so erfolgen, dass vor und nach jeder Zufuhr einer Schmelze eine Entgasung erfolgen kann. Weiterhin ist es auch möglich, eine oder mehrere Entgasungsabschnitte zusätzlich nach dem letzten Plastifizierungsabschnitt anzuordnen. In einer bevorzugten Ausführungsform sind die nach dem letzten Plastifizierungsabschnitt angeordneten Entgasungsabschnitte die einzigen Entgasungsabschnitte der Vorrichtung. Wegen der im Allgemeinen über 100 °C liegenden Temperatur der Polymerschmelze tritt das Wasser zumeist vollständig als Dampf aus. Die zur Verdampfung des Wassers notwendige Energie wird durch das Abquetschen, das Plastifizieren und/oder über die dosierte Schmelze eingebracht, in untergeordnetem Anteil auch durch externes Beheizen des Extruders in diesem Bereich.

Die Entgasungsöffnungen können, wie eingangs erläutert, angeordnet sein und die eingangs beschriebene Geometrie haben. Besonders bevorzugt ist eine oben oder unten liegende oder seitliche Anordnung mit rechteckigem, kreisförmigem oder Doppelacht-Querschnitt. Mindestens eine der Entgasungsöffnungen weist dabei erfindungsgemäß den Steg auf.

Die Entgasungsöffnungen können unter Normaldruck, unter Vakuum oder unter Überdruck betrieben werden, wobei alle Entgasungsöffnungen gleichen oder unterschiedlichen Druck aufweisen können. Durch entsprechenden Druckaufbau oder Vakuum kann der Feuchtegehalt des Extrusionsgutes an dieser Stelle in gewissen Grenzen eingestellt werden. Im Falle eines Vakuums beträgt der Absolutdruck üblicherweise 2 bis 900 mbar, bevorzugt 10 bis 800 mbar, besonders bevorzugt 30 bis 500 mbar. Bei einer Entgasung unter Überdruck wird in der Regel bis zu 20 bar Absolutdruck eingestellt. Bevorzugt ist es jedoch, die Entgasungsabschnitte unter Normaldruck oder unter Vakuum zu betreiben.

Die Anzahl der Entgasungsabschnitte sowie, wie eingangs erläutert, die Zahl, Anordnung und Dimensionierung der Entgasungsöffnungen richtet sich zweckmäßigerweise nach dem Wassergehalt des in die Entgasungsabschnitte eintretenden Polymeren und dem gewünschten Wasseranteil im Endprodukt. In einer bevorzugten Ausführungsform wird ein Extruder mit zwei oder drei Entgasungsabschnitten verwendet.

Da im Allgemeinen bereits ein Teil des in der Elastomerkomponente A enthaltenden Restwassers in den Abquetschabschnitten entfernt wurde, werden, in allen Entgasungsabschnitten zusammengenommen, etwa 10 bis 80, bevorzugt 20 bis 75 Gew.-% des vor der Extrusion in der Elastomerkomponente A enthaltenen Restwassers entfernt.

Im Bereich der Entgasungsabschnitte sind die Extruderschnecken in der Regel als übliche Förderschnecken ausgebildet, wie sie bereits für die Einzugszonen beschrieben wurden. Es kann jedoch sinnvoll sein, im Bereich zwischen den Entgasungsöffnungen Knet- oder Durchmischelemente in die Schnecken einzubauen, um die bei der Verdampfung des Wassers verbrauchte Energie wieder zuzuführen.

Zwischen dem letzten Entgasungsabschnitt und der Austragszone kann ein weiterer Abschnitt vorgesehen sein, in dem mittels mindestens einer Dosiereinrichtung die Komponenten C und/oder D, bzw. Anteile der insgesamt zugegebenen Menge der Komponenten C und/oder D, entweder gemeinsam oder getrennt voneinander dem Extruder zugeführt werden. Dieser weitere Abschnitt ist üblicherweise mit Durchmischungs-, Knet- oder anderen Plastifizierungselementen versehen, wie sie beispielhaft für die Umwandlungszonen bereits genannt wurden. Durch diese Elemente wird die Polymerenmischung homogenisiert.

Die Vorrichtung zum Extrudieren der Formmasse wird durch eine Austragszone abgeschlossen. Diese umfasst im Allgemeinen die Förderschnecken und ein geschlossenes Gehäuseteil, das mit einer definierten Austragsöffnung abgeschlossen ist. Bevorzugt wird als Austragsöffnung ein Düsenkopf verwendet, der beispielsweise als Düsenplatte oder Düsenleiste ausgebildet ist. Die Düsen können kreisförmig, schlitzförmig oder in anderer Weise gestaltet sein. Das im Falle einer Düsenplatte als Strang ausgetragene Produkt wird wie üblich, zum Beispiel in Wasser abgekühlt und granuliert. Speziell bei Verwendung einer Schlitzdüse ist Würfelgranulierung möglich.

In einer besonderen Ausführungsform ist es möglich, anstatt der Düsenleiste mit der sonst üblichen Kombination aus Strangabzug, Wasserbad und Granulator einen Düsenkopf mit anschließender Unterwassergranulierung einzusetzen. Hierbei tritt die Polymerschmelze durch eine Düsenplatte mit bevorzugt kreisförmig angeordneten runden Bohrungen, wird unter Wasser von rotierenden Messern abgetrennt und unter Wasser abgekühlt, wobei das Polymer zu mehr oder weniger runden, perlförmigen Körnern erstarrt. Bei der Anordnung der Bohrungen sind jedoch auch andere als kreisförmige Anordnungen und andere als runde Lochformen gebräuchlich.

Alternativ ist es auch möglich, ein Heißabschlagsverfahren einzusetzen, bei dem die aus dem Düsenkopf austretende Polymerschmelze nicht durch Flüssigkeit gekühlt, sondern nach Austritt aus dem Düsenkopf nach kurzer Luftkühlung noch im heißen Zustand zerkleinert wird. Das entstehende Granulat wird danach weiter gekühlt, beispielsweise durch Besprühen mit Wasser oder kühlt bei der Weiterverarbeitung ab, sofern dies notwendig ist. Es ist auch die Weiterverarbeitung im heißen Zustand oder die Direktextrusion von Platten, Folien, Rohren und Profilen möglich.

In einer weiteren Ausführungsform wird eine sogenannte Unterwasser-Stranggranulierung eingesetzt. Hierbei tritt die Schmelze als Strang aus einer Düsenplatte aus und wird sofort durchweinen Wasserschwall benetzt, wonach die Stränge über eine schiefe Ebene in ein Wasserbad eingeführt und nach dem Abkühlen granuliert werden.

In einer besonderen Ausführungsform ist die Austragszone mit einer Vorrichtung zur Filtration der aus dem Extruder austretenden Schmelze versehen, die sich - in Förderrichtung - vor dem Düsenkopf befindet. Derartige Vorrichtungen zur kontinuierlichen Schmelzefiltration sind dem Fachmann bekannt und handelsüblich. Man kann, falls notwendig, zwischen Austragszone und Schmelzefiltration ein Förderorgan installieren, beispielsweise eine Schmelzepumpe oder einen Schneckenförderer, um in der Schmelze den zum Passieren der Filtereinheit notwendigen Druck aufzubauen.

Die aus der Filtrationsvorrichtung austretende Schmelze wird granuliert bzw. auf andere Art weiterverarbeitet, wie es bereits beschreiben wurde.

Der Wassergehalt des ausgetragenen Polymeren, d. h. die "Strangfeuchte", beträgt in der Regel 0,05 bis 1,5 Gew.-%, bezogen auf dieses Polymere. Die Temperatur der aus der Austragsöffnung austretenden Polymerschmelze beträgt in der Regel 180 bis 350 °C, je nach Art der eingesetzten Polymeren.

Wie allgemein bekannt ist, können die verschiedenen Zonen eines Extruders individuell geheizt oder gekühlt werden, um entlang der Schneckenachse ein optimales Temperaturprofil einzustellen. Weiterhin ist dem Fachmann geläufig, dass üblicherweise die einzelnen Abschnitte des Extruders verschieden lang sein können. Speziell kann es zur Erlangung bestimmter Produkteigenschaften sinnvoll sein, bestimmte Teilbereiche des Extruders zu kühlen oder auf eine bestimmte, von der Temperatur des restlichen Extruders abweichende Temperatur zu temperieren.

Die im Einzelfall zu wählenden Temperaturen und Längen der einzelnen Abschnitte unterscheiden sich in Abhängigkeit der beispielhaft bereits erwähnten chemischen und physikalischen Eigenschaften der Komponenten und deren engen Verhältnissen.

Gleiches gilt auch für die Schneckendrehzahl, die innerhalb eines weiten Bereiches variiert werden kann. Nur beispielhaft sei eine Drehzahl der Extruderschnecken im Bereich von 50 bis 1800 min⁻¹ genannt. Bevorzugt ist ein Drehzahlbereich von 100 bis 700 min⁻¹.

Es ist vorteilhaft, den Extruder so auszugestalten und zu betreiben, dass sich bei einer Schneckendrehzahl von 50 bis 1200 min⁻¹ im Bereich der Abquetschabschnitte mittlerer Schergeschwindigkeiten von 15 bis 450 s⁻¹ einstellen. Für den bevorzugten Drehzahlbereich von 100 bis 700 min⁻¹ werden vorteilhafte Geschwindigkeiten von 35 bis 260 s⁻¹ eingestellt. Jedoch kann es je nach Art, Menge und Eigenschaften der verwendeten Komponenten zweckmäßig sein, bei mittleren Schergeschwindigkeiten außerhalb dieses Bereiches zu arbeiten.

Als Extruderschnecken können alle handelsüblichen Schnecken verwendet werden, beispielsweise Schnecken mit einem Außendurchmesser von 10 bis 1000 mm. Welche Schneckendurchmesser geeignet sind, richtet sich zum Beispiel nach Art und Menge der in den Extruder eindosierten Komponenten. Der Außendurchmesser der Schnecken kann entlang des Extruders konstant sein oder in gewissen Grenzen variieren.

Im Extruder können je nach Art und Mengen der Komponenten Schnecken mit kleiner Gangtiefe oder Schnecken mit großer Gangtiefe, sogenannte tiefgeschnittene Schnecken, verwendet werden. Bevorzugt werden Schnecken mit einem Gangtiefenverhältnis D_{Schnecke, außen} / D_{Schnecke,} innen von 1,2 bis 1 ,8, bevorzugt 1,4 bis 1 ,6, besonders bevorzugt 1,45 bis 1,58, verwendet. Eine handelsübliche Ausführungsform des Extruders, der für das erfindungsgemäße Verfahren geeignet ist, weist beispielsweise ein Gangtiefenverhältnis von 1,55 auf, hat also eine große Gangtiefe.

In einer anderen Ausführungsform werden Schnecken mit mittlerer Gangtiefe, besonders solche mit einem Gangtiefenverhältnis von 1,4 bis 1,48 verwendet. Diese Ausführungsform des Extruders kann für bestimmte Komponenten und bestimmte Mengen der Komponenten vorteilhaft sein. Es sind auch Schnecken mit Gangtiefenverhältnissen von mehr als zwei geeignet.

Die Gangzahl n der Schnecke kann variieren. Insbesondere ist die Gangzahl n gleich 1 oder 2 oder 3. Bevorzugt werden zweigängige Schnecken verwendet. Jedoch können auch Schnecken mit anderen Gangzahlen eingesetzt werden oder solche Schnecken, die Abschnitte mit unterschiedlichen Gangzahlen aufweisen.

Insbesondere können Extruderschnecken verwendet werden, bei denen das Gangtiefenverhältnis entlang der Schnecke variiert, wobei ein Zusammenhang zwischen Gangzahl und Gangtiefenverhältnis besteht, eine sogenannte Stufenschnecke. Bevorzugt kann eine Schnecke eingesetzt werden, bei der der Wechsel von 3 auf 2 Gänge mit einer Änderung der Gangtiefe von niedrigem zu hohem Gangtiefenverhältnis einhergeht.

Alle beschriebenen Ausführungsformen des Verfahrens haben gemeinsam, dass die Einführung-der Komponenten C und/oder D in den Extruder nicht in den Bereichen erfolgt, in denen der Extruderinhalt unter hohem Druck steht, erzeugt durch druckaufbauende Elemente. Vielmehr werden C und/oder D in ausreichendem Abstand vor oder hinter diesen Bereichen oder völlig drucklos, d. h. nur gegen den üblichen Druck eines neutral fördernden Schneckenelementes, zudosiert.

Als Elastomerkomponente A kann jedes Polymere eingesetzt werden, das elastomere Eigenschaften hat und einem Extruder zugeführt werden kann. Es kann auch eine Mischung verschiedener Elastomerkomponenten A eingesetzt werden.

Insbesondere werden als Komponente A, wie eingangs erwähnt, partikelförmige Kautschuke verwendet. Besonders bevorzugt sind solche Kautschuke, die eine aufgepfropfte Hülle aus anderen, in der Regel nicht elastomeren Polymeren aufweisen. Die dem Extruder als teilentwässertes Material zugeführten Pfropfkautschuk-Typen enthalten in einer bevorzugten Ausführungsform der Erfindung bis zu 50, besonders bevorzugt 25 bis 40 Gew.-% Restwasser.

Eine Ausführungsform der Erfindung besteht in einem Verfahren, bei dem als Elastomerkomponente A zwei- oder mehrstufig aufgebaute Pfropfkautschuke verwendet werden, bei denen die elastomeren Grund- oder Pfropfstufen durch Polymerisation eines oder mehrerer der Monomeren Butadien, Isopren, Chloropren, Styrol, Alkylstyrol, C₁-bis C₁₀-Alkylester der Acrylsäure oder der Methacrylsäure sowie geringe Mengen anderer, auch vernetzender Monomeren erhalten werden, und bei denen die harten Pfropfstufen aus einem oder mehreren der Monomeren Styrol, Alkylstyrol, Acrylnitril, Methylmethacrylat polymerisiert werden.

Bevorzugt sind Pfropfpartikel A aus Polymeren auf Basis von Butadien/Styrol/Acrylnitril, n-Butylacrylat/Styrol/Acrylnitril, Butadien/n-Butylacrylat/Styrol/Acrylnitril, n-Butylacrylat/Methylmethacrylat, n-Butylacrylat/Styrol/Methylmethacrylat, Butadien/Styrol/Acrylnitril/Methylmethacrylat und Butadien/n-Butylacrylat/Methylmethacrylat/Styrol/Acrylnitril. In Kern oder Schale können bis zu 10 Gew.-% funktionelle Gruppen tragende, polare Monomere oder auch vernetzend wirkende Monomere, einpolymerisiert sein.

In dieser Ausführungsform werden als thermoplastische Polymere B Styrol-Acrylnitril-(SAN)-Copolymere, Polystyrol, Polymethylmethacrylat, Polyvinylchlorid oder Mischungen dieser Polymere eingesetzt.

Dabei sind SAN-Polymere, Polymethylmethacrylat (PMMA) oder Mischungen dieser Polymere bevorzugt.

Weiterhin können als thermoplastische Polymere B auch Polycarbonate, Polyalkylenterephthalate wie Polybutylenterephthalat und Polyethylenterephthalat, Polyoxymethylen, Polymethylmethacrylat, Polyphenylensulfid, Polysulfone, Polyethersulfone und Polyamide, und Mischungen dieser Thermoplaste, eingesetzt werden. Außerdem können auch thermoplastische Elastomere, wie thermoplastisches Polyurethan (TPU), als Polymere B verwendet werden.

Ebenso kann man als Komponente B Copolymere auf Basis von Styrol/Maleinsäureanhydrid, Styrol/imidiertem Maleinsäureanhydrid, Styrol/Maleinsäureanhydrid/imidiertem Maleinsäureanhydrid, Styrol/Methylmethacrylat/imidiertem Maleinsäureanhydrid, Styrol/Methylmethacrylat, Styrol/Methylmethacrylat/Maleinsäureanhydrid, Methylmethacrylat/imidiertem Maleinsäureanhydrid, Styrol/imidiertem Methylmethacrylat, imidiertem PMMA oder Mischungen dieser Polymere verwenden.

Bei allen genannten thermoplastischen Polymeren B kann das Styrol ganz oder teilweise durch α-Methylstyrol, oder durch kernalkylierte Styrole, oder durch Acrylnitril ersetzt sein.

Von den zuletzt genannten Polymeren B sind solche auf Basis von α-Methylstyrol/Acrylnitril, Styrol/Maleinsäureanhydrid, Styrol/Methylmethacrylat und Copolymere mit imidiertem Maleinsäureanhydrid bevorzugt.

Bekannte Beispiele für die Elastomerkomponente A sind Polymerisate von konjugierten Dienen, wie Butadien, mit einer äußeren Pfropfhülle auf Basis einer vinylaromatischen Verbindung wie etwa SAN-Copolymeren. Gleichfalls bekannt sind Pfropfkautschuke auf Basis von vernetzten Polymerisaten aus C₁- bis C₁₀-Alkylestern der Acrylsäure, wie n-Butylacrylat, Ethylhexylacrylat, gepfropft mit Polymeren auf der Grundlage vinylaromatischer Verbindungen wie SAN-Copolymeren. Gebräuchlich sind auch Pfropfkautschuke, die im Wesentlichen ein Copolymerisat aus konjugierten Dienen und C₁- bis C₁₀-Alkylacrylaten, beispielsweise ein Butadien-n-Butylacrylat-Copolymerisat, und eine äußere Pfropfstufe aus SAN-Copolymer, Polystyrol oder PMMA enthalten.

Die Herstellung solcher Pfropfkautschuke nach den üblichen Verfahren, insbesondere durch Emulsions- oder Suspensionspolymerisation, ist bekannt.

Pfropfkautschuke auf Basis von SAN-gepfropftem Polybutadien sind beispielsweise in den Schriften DT 24 27 960 und EP-A 258 741 beschrieben, solche auf Basis von SAN-gepfropftem Poly-n-Butylacrylat in DE AS 12 60 135 und DE-OS 31 49 358. Näheres zu SAN-gepfropften Poly(Butadien/n-Butylacrylat)-Mischkautschuken ist der EP-A 62 901 zu entnehmen.

Als thermoplastische Polymere B werden im Falle der im letzten Absatz genannten Pfropfkautschuke Copolymere aus Styrol und Acrylnitril verwendet. Sie sind bekannt und z.T. auch handelsüblich und haben in der Regel eine Viskositätszahl VZ (ermittelt nach DIN 53 726 bei 25°C, 0,5 Gew.-% in Dimethylformamid) von 40 bis 160 ml/g, entsprechend einer mittleren Molmasse M_{w} von etwa 40000 bis 2000000.

Bevorzugt werden die thermoplastischen Polymeren B durch kontinuierliche Substanz- oder Lösungspolymerisation hergestellt, wobei die erhaltene Schmelze, gegebenenfalls nach Entfernung der Lösungsmittel, beispielsweise mit einer Schmelzepumpe kontinuierlich direkt dem Extruder zugeführt wird. Jedoch ist auch eine Herstellung durch Emulsions-, Suspensions- oder Fällungspolymerisation möglich, wobei in einem zusätzlichen Arbeitsschritt das Polymere von der flüssigen Phase getrennt wird.

Einzelheiten der Herstellungsverfahren sind z.B. im Kunststoffhandbuch, Hrg. R. Vieweg und G. Daumiller, Bd. V "Polystyrol", Carl-Hanser-Verlag, München, 1969, S. 118 bis S. 124 beschrieben.

Ist die Elastomerkomponente A ein SAN-gepfropftes Polybutadien, so entsteht durch Einarbeiten des SAN eine Formmasse, die als ABS (Acrylnitril/Butadien/Styrol) bekannt ist. Wird als Komponente A ein SAN-gepfropftes Alkylacrylat verwendet, so entstehen sog. ASA-Formmassen (Acrylnitril/Styrol/Acrylat).

In einer anderen Ausführungsform werden Pfropfkautschuke mit bis zu 60 Gew.-% Restwassergehalt auf Basis von Polydienen und/oder Polyalkylacrylaten sowie SAN und/oder PMMA eingesetzt, die aus mehr als zwei Pfropfstufen aufgebaut sind. Beispiele für solche vielstufigen Pfropfpartikel sind Teilchen, die als Kern ein Polydien und/oder Polyalkylacrylat, als erste Hülle ein Polystyrol oder SAN-Polymeres und als zweite Hülle ein anderes SAN-Polymeres mit einem veränderten Gewichtsverhältnis Styrol : Acrylnitril enthalten, oder auch Teilchen aus einem Polystyrol-, Polymethylmethacrylat- oder SAN-Polymerisat-Kern, einer ersten Hülle aus Polydien und/oder Polyalkylacrylat und einer zweiten Hülle aus Polystyrol, Polymethylmethacrylat oder SAN-Polymer. Weitere Beispiele sind Pfropfkautschuke aus einem Polydienkern, einer oder mehreren Polyalkylacrylathüllen und einer oder mehreren Polymer-Hüllen aus Polystyrol, Polymethylmethacrylat oder SAN-Polymer oder analog aufgebaute Pfropfkautschuke mit Acrylatkern und Polydienhüllen.

Ferner sind Copolymerisate mit mehrstufigem Kern-Schale-Aufbau aus vernetztem Alkylacrylat, Styrol, Methylmethacrylat und einer äußeren Schale aus PMMA gebräuchlich.

Solche mehrstufigen Pfropfkautschuke sind z.B. in DE-OS 31 49 046 beschrieben. Pfropfkautschuke auf Basis von n-Butylacrylat/Styrol/Methylmethacrylat mit einer Hülle aus PMMA werden z.B. in EP-A 512 333 beschrieben, wobei auch jeder andere, dem Stand der Technik entsprechende Aufbau solcher Pfropfkautschuke möglich ist.

Derartige Kautschuke werden als schlagzäh machende Komponente für Polyvinylchlorid und bevorzugt für schlagzähes PMMA eingesetzt.

Als thermoplastische Polymere B werden bevorzugt wiederum die genannten SAN-Copolymere und/oder PMMA verwendet.

Ist die Elastomerkomponente A ein mehrschalig aufgebautes Kern/Schale-Polymer auf Basis n-Butylacrylat/Methylmethacrylat, und das Polymere B PMMA, so erhält man demnach schlagzähes PMMA.

Der Durchmesser der partikelförmigen Pfropfkautschuke beträgt 0,05 bis 20 mm. Handelt es sich um die allgemein bekannten Pfropfkautschuke kleinen Durchmessers, so beträgt er bevorzugt 0,08 bis 1,5 und besonders bevorzugt 0,1 bis 0,8 mm.

Bei den zweckmäßigerweise mittels Suspensionspolymerisation hergestellten großteiligen Pfropfkautschuken ist der Durchmesser bevorzugt 1,8 bis 18 und insbesondere 2 bis 15 mm. Derartige Pfropfkautschuke großen Durchmessers lehrt beispielsweise die DE-OS 44 43 886.

Bevorzugte Komponente B sind auch in dieser Ausführungsform die genannten SAN-Copolymere, Polystyrol und/oder PMMA.

Bei der Komponente C handelt es sich um weitere Polymere, insbesondere um thermoplastische Polymere. Für die Komponente C kommen alle Polymere in Betracht, die für das thermoplastische Polymere B genannt wurden. In der Regel unterscheiden sich die Polymeren B und C durch die verwendeten Monomeren.

Sind die Monomeren, aus denen die Polymere B und C aufgebaut sind, identisch, so unterscheiden sich die Komponenten B und C in der Regel durch die Mengenanteile der Monomere - beispielsweise können die Polymere B und C Styrol-Acrylnitril-Copolymere sein, die sich im Styrol:Acrylnitril-Verhältnis unterscheiden. Falls auch die Mengenanteile der Monomeren identisch sind, unterscheiden sich die Polymere B und C durch ihre verschiedenen mittleren Molmassen M_{w}(B) und M_{w}(C), messbar beispielsweise als verschiedene Viskositätszahlen VZ(B) und VZ(C).

Als Monomere zur Herstellung von C können neben den für die Komponente B unter anderem genannten Monomeren Styrol, Acrylnitril, Methylmethacrylat und Vinylchlorid auch folgende andere Verbindungen als wesentliche Bestandteile verwendet werden:
- α-Methylstyrol und C₁ bis C₈-kernatkylierte Styrole bzw. α-Methylstyrole,
- Methacrylnitril,
- C₁ bis C₂₀-Alkylester der Acrylsäure und der Methacrylsäure,
- Maleinsäure, Maleinsäureanhydrid, sowie Maleinsäureimide,
- Vinylether, Vinylformamid.

Beispielhaft seien für die Komponente C Polymere auf Basis α-Methylstyrol/Acrylnitril und Methylmethacrylat/Alkylacrylat, sowie Copolymere aus Alkylestern der Acrylsäure oder der Methacrylsäure und Styrol bzw. Acrylnitril bzw. Styrol und Acrylnitril genannt.

Weitere bevorzugte Polymere C sind
- Styrol-Acrylnitril-Copolymere mit von der Komponente B abweichenden Mengenanteilen der Monomeren, oder verschiedenen mittleren Molmassen M_{w},
- Copolymere aus α-Methylstyrol und Acrylnitril,
- Polymethylmethacrylate,
- Polycarbonate,
- Polybutylenterephthalat und Polyethylenterephthalat,
- Polyamide,
- Copolymere aus mindestens zwei der Monomeren Styrol, Methylmethacrylat, Maleinsäureanhydrid, Acrylnitril und Maleinimiden, beispielsweise Copolymere aus Styrol, Maleinsäureanhydrid und Phenylmaleinimid,
- mittels Massepolymerisation oder Lösungspolymerisation hergestelltes ABS,
- thermoplastische Polyurethane (TPU).

Die Herstellung dieser Polymere ist dem Fachmann bekannt, weshalb nachfolgend nur kurz darauf eingegangen wird.

Unter Polymethylmethacrylaten sind insbesondere Polymethylmethacrylat (PMMA) sowie Copolymere auf der Basis von Methylmethacrylat mit bis zu 40 Gew.-% weiterer copolymerisierbarer Monomerer zu verstehen, wie sie beispielsweise unter den Bezeichnungen Lucryl^{®} von der BASF Aktiengesellschaft oder Plexiglas^{®} von Röhm GmbH erhältlich sind. Nur beispielhaft sei ein Copolymeres aus 98 Gew.-% Methylmethacrylat und 2 Gew.-% Methylacrylat als Comonomer (Plexiglas^{®} 8N, Fa. Röhm) genannt. Ebenso geeignet ist ein Copolymeres aus Methylmethacrylat mit Styrol und Maleinsäureanhydrid als Comonomeren (Plexiglas^{®} HW55, Fa. Röhm).

Geeignete Polycarbonate sind an sich bekannt. Sie sind z.B. entsprechend den Verfahren der DE-B 1 300 266 durch Grenzflächenpolykondensation oder gemäß dem Verfahren der DE-A 14 95 730 durch Umsetzung von Biphenylcarbonat mit Bisphenolen erhältlich. Bevorzugtes Bisphenol ist 2,2-Di(4-hydroxyphenyl)propan, im Allgemeinen als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Polycarbonate sind beispielsweise unter den Handelsnamen Makrolon^{®} (Fa. Bayer), Lexan^{®} (Fa. General Electric), Panlite^{®} (Fa. Tejin) oder Calibre^{®} (Fa. Dow) erhältlich. Die relative Viskosität dieser Polycarbonate liegt im Allgemeinen im Bereich von 1,1 bis 1,5, insbesondere 1,28 bis 1,4 (gemessen bei 25°C in einer 0,5 gew.-%igen Lösung in Dichlormethan).

Polybutylenterephthalat und Polyethylenterephthalat werden in der Regel in an sich bekannter Weise durch Kondensation von Terephthalsäure bzw. deren Estern mit Butandiol bzw. Ethandiol unter Katalyse hergestellt. Dabei wird die Kondensation vorteilhaft zweistufig (Vorkondensation und Polykondensation) durchgeführt. Einzelheiten sind etwa Ullmann's Encyclopädie der Technischen Chemie, 4. Auflage, Band 19, S. 61-88 zu entnehmen. Polybutylenterephthalat ist beispielsweise als Ultradur^{®} (Fa. BASF) im Handel erhältlich.

Bevorzugte Polyamide sind ganz allgemein solche mit aliphatischem teilkristallinen oder teilaromatischem sowie amorphem Aufbau jeglicher Art und deren Blends. Entsprechende Produkte sind z.B. unter dem Handelsnamen Ultramid^{®} (Fa. BASF) erhältlich.

Thermoplastische Polyurethane werden üblicherweise hergestellt durch Umsetzung von organischen, vorzugsweise aromatischen Diisocyanaten wie etwa 4,4'-Diphenylmethandiisocyanat, mit Polyhydroxylverbindungen, die vorzugsweise im wesentlichen linear sind, etwa Polyetherole, oder Polyesterole wie Polyalkylenglycolpolyadipate, und als Kettenverlängerungsmittel wirkenden Diolen wie Butan-1,4-diol, in Gegenwart von Katalysatoren wie etwa tertiären Aminen (wie Triethylamin) oder organischen Metallverbindungen.

Dabei beträgt das Verhältnis NCO-Gruppen der Diisocyanate zur Summe der OH-Gruppen (aus den Polyhydroxylverbindungen und den kettenverlängernden Diolen) bevorzugt etwa 1 zu 1.

Bevorzugt erfolgt die Herstellung der TPU nach dem sogenannten Bandverfahren, bei dem die genannten Komponenten und der Katalysator mittels eines Mischkopfes kontinuierlich gemischt und die Reaktionsmischung auf ein Förderband aufgebracht wird. Das Band durchläuft eine auf 60 bis 200°C temperierte Zone, wobei die Mischung ausreagiert und erstarrt.

Einzelheiten zu den TPU sind z.B. der EP-A 443 432 zu entnehmen. TPU sind beispielsweise unter dem Handelsnamen Elastollan^{®} (Fa. Elastogran) erhältlich.

Weiterhin kann die Komponente C im Wesentlichen aus Copolymeren von C₂- bis C₈-Alkenen wie Ethylen, Propen und Buten mit
- Vinylaromaten,
- polaren Comonomeren wie Acrylsäure und Methacrylsäure, den C₁- bis C₁₀-Alkylestern der Acrylsäure und der Methacrylsäure,
- anderen mono- oder polyfunktionellen ethylenisch ungesättigten Säuren wie Maleinsäure, Maleinsäureanhydrid, Fumarsäure, Itaconsäure sowie deren Estern, insbesondere Glycidylestern, Estern mit C₁ bis C₈-Alkanolen und Estern mit arylsubstituierten C₁ bis C₈-Alkanolen,
- Kohlenstoffmonoxid,
- nichtaromatischen Vinylverbindungen wie Vinylacetat, Vinylpropionat und Vinylalkylethern,
- basischen Monomeren wie Hydroxyethylacrylat, Dimethylaminoethylacrylat, Vinylcarbazol, Vinylanilin, Vinylcaprolactam, Vinylpyrrolidon, Vinylimidazol und Vinylformamid,
- Acrylnitril, Methacrylnitril
bestehen, die in allgemein bekannter Weise hergestellt werden.

In einer bevorzugten Ausführungsform wird ein Polymeres C verwendet, das aus 40 bis 75 Gew.-% Ethylen, 5 bis 20 Gew.-% Kohlenstoffmonoxid und 20 bis 40 Gew.-% n-Butylacrylat herstellbar ist (als Elvaloy^{®} HP-4051 (Fa. DuPont) im Handel erhältlich), oder ein Polymeres, das aus 50 bis 98,9 Gew.-% Ethylen, 1 bis 45 Gew.-% n-Butylacrylat und 0,1 bis 20 Gew.-% einer oder mehreren Verbindungen ausgewählt aus der Gruppe Acrylsäure, Methacrylsäure und Maleinsäureanhydrid, herstellbar ist.

Die Herstellung der letztgenannten Ausführungsformen erfolgt üblicherweise durch radikalische Polymerisation und ist in den Schriften US 2 897 183 und US 5 057 593 beschrieben.

Außerdem sind Copolymere aus Butadien oder substituierten Butadienen mit Styrol, Methylmethacrylat oder Acrylnitril geeignet, beispielsweise Nitrilkautschuk (NBR) oder Styrol-Butadien-Kautschuk (SBR). Die olefinischen Doppelbindungen in diesen Copolymeren können ganz oder teilweise hydriert sein.

Ebenso sind als Komponente C, gegebenenfalls hydrierte oder teilweise hydrierte, Copolymere aus Butadien und Styrol mit Blockstrukturen geeignet. Sie werden bevorzugt nach der Methode der anionischen Polymerisation in Lösung unter Verwendung metallorganischer Verbindungen wie sek.-Butyllithium hergestellt, wobei lineare Blockkautschuke beispielsweise des Aufbaus Styrol/Butadien (Zweiblock) oder Styrol/Butadien/Styrol (Dreiblock) entstehen. Diese Blöcke können von Polymeren mit statistischer Verteilung voneinander getrennt sein, und ferner können die Blöcke auch in untergeordneten Mengen Einheiten des jeweils anderen Monomeren enthalten.

Bei Mitverwendung geringer Mengen eines Ethers, insbesondere Tetrahydrofuran (THF) neben dem Initiator, entstehen Polymerketten, welche, von einem Butadienreichen Ausgangssegment ausgehend, entlang der Kette einen steigenden Styrolgehalt aufweisen und schließlich in einem Homo-Polystyrol-Endsegment enden. Einzelheiten des Herstellungsverfahrens sind in der DE-A 31 06 959 beschrieben. Auch derart aufgebaute, gegebenenfalls hydrierte oder teilweise hydrierte, Polymere C sind gut geeignet.

Ebenfalls gut geeignet als Komponente C sind Polymere mit sternförmiger Struktur, die man durch Verknüpfung mehrerer Polymerketten, hauptsächlich von Dreiblockpolymerisaten des Typs Styrol/Butadien/Styrol, über polyfunktionelle Moleküle erhält. Geeignete Verknüpfungsmittel sind z.B. Polyepoxide, beispielsweise epoxidiertes Leinsamenöl, Polyisocyanate wie Benzo-1,2,4-triisocyanat, Polyketone wie 1,3,6-Hexantrion und Polyanhydride, außerdem Dicarbonsäureester wie Diethyladipat, sowie Siliciumhalogenide wie SiCl₄, Metallhalogenide wie TiCl₄ und Polyvinylaromaten wie Divinylbenzole. Näheres über die Herstellung dieser Polymeren ist z.B. der DE-A 26 10 068 zu entnehmen.

Neben der Elastomerkomponente A und den Polymeren B und C können die nach dem erfindungsgemäßen Verfahren hergestellten Formmassen als weitere Komponente D Zusatzstoffe, beispielsweise Wachse, Weichmacher, Gleit- und Entformungsmittel, Pigmente, Farbstoffe, Mattierungsmittel, Flammschutzmittel, Antioxidantien, Stabilisatoren gegen Lichteinwirkung und thermische Schädigung, faser- und pulverförmige Füll- und Verstärkungsmittel und Antistatika in den für diese Mittel üblichen Mengen enthalten.

Die Zusatzstoffe D können in reiner Form fest, flüssig oder gasförmig vorliegen, oder bereits als Gemisch der reinen Stoffe miteinander eingesetzt werden. Sie können ebenso in einer Formulierung eingesetzt werden, welche die Dosierung erleichtert, etwa als Lösung, oder als Dispersion (Emulsion oder Suspension). Auch eine Formulierung als Masterbatch, d.h. als konzentrierte Mischung mit einem mit dem Extruderinhalt verträglichen thermoplastischen Polymeren, ist geeignet und in manchen Fällen bevorzugt.

Die Polymeren C und die Zusatzstoffe D können in einem oder mehreren der genannten Extruderabschnitte dem Extruder zugeführt werden. In einer bevorzugten Ausführungsform werden die Komponenten C und D - getrennt von der Elastomerkomponente A und dem thermoplastischen Polymeren B - im Entlüftungsabschnitt 1, im Dosierabschnitt 2, und/oder im Abschnitt 4, in dem das Polymere B dem Extruder zugeführt wird, in den Extruder eingeführt. In einer weiteren bevorzugten Ausführungsform werden die Komponenten C und/oder D im weiteren Abschnitt 7 dem Extruder zugeführt.

Die Bestandteile C und D können in den bzw. die gleichen Abschnitte oder jeweils in verschiedene Extruderabschnitte eindosiert werden, und man kann sowohl C als auch D zu 100 % in einem Abschnitt oder verteilt auf mehrere Abschnitte dem Extruder zuführen.

Die genaue Ausgestaltung der Zufuhr von C und D hängt ab von den erwähnten physikalischen und chemischen Eigenschaften der Komponenten A bis D und deren Mengenverhältnissen. So können beispielsweise Zusatzstoffe D mit geringer thermischer Beständigkeit erst in der Austragszone dem Extruder zugeführt werden, wodurch ein thermischer Abbau der Stoffe D weitgehend verhindert wird.

Die mit dem Verfahren hergestellten thermoplastischen Formmassen können mit den allgemein üblichen Verfahren zu Formkörpern verarbeitet-werden.-Beispielhaft seien Extrusion (für Rohre, Profile, Fasern, Folien und Platten), Spritzgießen (für Formteile aller Art) sowie Kalandrieren und Walzen (für Platten und Folien) genannt.

Ein wesentlicher Vorteil der erfindungsgemäßen Vorrichtung und des erfindungsgemäßen Verfahrens ist, dass im Wesentlichen keine Feinpartikel aus dem Extruder über die Entgasungsöffnungen austreten.

Weiterhin ist die erfindungsgemäße Vorrichtung technisch erheblich einfacher als die bekannten Vorrichtungen und stellt eine größere Entgasungsöffnung bereit.

Gegenüber den aus dem Stand der Technik bekannten Vorrichtungen hat die erfindungsgemäße weiterhin den Vorteil dass sie sich wesentlich leichter handhaben lässt, so dass Reinigung und Wechsel sehr schnell erfolgen können.

Eine Ausführungsform der Erfindung ist in der Zeichnung dargestellt und wird in der nachfolgenden Beschreibung näher erläutert.

Die einzige Figur zeigt eine Schnittansicht durch einen Extruder im Bereich einer erfindungsgemäß ausgebildeten Entgasungsöffnung.

In der einzigen Figur ist ein Schnitt durch einen Extruder im Bereich einer erfindungsgemäß ausgebildeten Entgasungsöffnung dargestellt.

Eine erfindungsgemäß ausgebildete Vorrichtung zum Extrudieren von Formmassen, insbesondere ein Extruder, umfasst mindestens zwei Schnecken 1, die in einem Gehäuse 3 aufgenommen sind. Die Form der Schnecken 1 und des Gehäuses 3 entspricht dabei üblichen, dem Fachmann bekannten Formen für Gehäuse 3 und Schnecken 1. Die Vorrichtung ist im Allgemeinen ein Extruder, der mindestens eine Einzugszone, mindestens eine Umwandlungszone und eine Austragszone aufweist. Erfindungsgemäß ist mindestens eine Entgasungsöffnung 5 vorgesehen, die einen Teilbereich im Gehäuse 3 über mindestens zwei ineinander eingreifenden Schnecken 1 ausspart: Bei einem Extruder, der mehr als zwei Schriecken 1 umfasst, ist es auch möglich, dass die Entgasungsöffnung 5 einen Teilbereich über mehr als zwei ineinander eingreifenden Schnecken ausspart.

In die Entgasungsöffnung 5 wird üblicherweise ein Entgasungseinsatz 7 eingesetzt. Der Entgasungseinsatz 7 umfasst erfindungsgemäß einen Steg 9. Der Steg 9 ist dabei derart angeordnet, dass dieser zumindest einen Teil der Schnecken 1 in deren Eingreifbereich 11 abdeckt. Wenn die Entgasungsöffnung 5 einen Teilbereich über mehr als zwei Schnecken 1 ausspart, ist jeweils im Eingreifbereich 11 zweier Schnecken ein Steg 9 angeordnet.

Erfindungsgemäß ist zwischen dem Steg 9 und der Schnecke 1 a, die im Bereich der Entgasungsöffnung 5 in Richtung zum Steg 9 hin rotiert, ein Spalt 13 ausgebildet, dessen Spaltweite in Rotationsrichtung der Schnecke abnimmt. Die Rotationsrichtung der Schnecke 1a ist hierbei durch einen Pfeil mit Bezugszeichen 15 dargestellt.

In der hier dargestellten Ausführungsform rotieren die Schnecken 1 gleichsinnig. Das heißt, dass eine Schnecke 1a in Richtung zum Steg 9 hin rotiert und eine Schnecke 1b vom Steg 9 weg rotiert. Zwischen der Schnecke 1b, die vom Steg 9 weg rotiert und dem Steg 9 ist ein Spalt 17 mit konstanter Spaltweite ausgebildet.

Der Entgasungseinsatz 7 umfasst weiterhin einen Rahmen 19. Zwischen dem Rahmen 19 und der Schnecke 1a, die zum Steg 9 hin rotiert, d. h. vom Rahmen 19 weg rotiert, ist ein Spalt 21 mit konstanter Spaltweite ausgebildet. Zwischen der Schnecke 1b, die vom Steg 9 weg rotiert, d. h. zum Rahmen 19 des Entgasungseinsatzes 7 hin rotiert, und dem Rahmen 19 ist ein Spalt 23 ausgebildet, der mit einer in Rotationsrichtung 15 der Schnecke 1 b abnehmenden Spaltweite ausgeführt ist.

Durch den Transport der Formmasse mit den Schnecken 1 wird der Druck der Formmasse im Allgemeinen erhöht. Sobald die Formmasse die Entgasungsöffnung 5 erreicht, erfolgt ein plötzlicher Druckabfall, wodurch die Formmasse entgast wird. Aufgrund des Druckabfalls strömen gasförmige Bestandteile der Formmasse in der Entgasungsöffnung 5 aus. Hierbei werden gegebenenfalls Teile der Formmasse in Form von Brocken oder Krümeln mitgerissen. Diese Brocken fallen anschließend wieder zurück oder bleiben an den Wänden kleben. Durch die abnehmende Spaltweite des Spaltes 13 zwischen der Schnecke 1a, die in Richtung des Steges 9 rotiert und der abnehmenden Spaltweite des Spaltes 23 zwischen dem Rahmen 19 und der Schnecke 1b, die vom Steg 9 weg rotiert, werden die zurückgefallenen Anteile der Formmasse von den Schnecken 1 wieder aufgenommen und in den Spalt 13 bzw. 23 gefördert. Im Spalt 13 bzw. 23 erfolgt erneut eine Kompression. Hierdurch wird vermieden, dass Teile der Formmasse im Bereich der Entgasungsöffnung 5 aufgestaut werden und gegebenenfalls am Gehäuse 3 bzw. dem Rahmen 19 des Entgasungseinsatzes 7 anbacken und gegebenenfalls vercracken, wodurch die Formmasse verunreinigt werden würde.

Im Unterschied zu den aus dem Stand der Technik bekannten Entgasungseinsätzen, die nur einen Bereich über einer Schnecke 1 freigeben, wird durch den erfindungsgemäßen Entgasungseinsatz 7 mit Steg 9 eine Öffnung über beiden Schnecken 1 des Zweischneckenextruders freigegeben. Hierdurch wird die gesamte Entgasungsöffnung vergrößert. Eine Vergrößerung bis zu 38 Prozent ist hierdurch möglich. Dies erlaubt eine verbesserte Entgasung der Formmasse.

Der Steg 9 ist im Allgemeinen so ausgebildet, dass die Breite des Steges 9 nach außen hin abnimmt, d. h., dass der Steg 9 spitz zuläuft. Hierdurch vergrößert sich von den Schnecken 1 weg der Öffnungsquerschnitt der Entgasungsöffnung 5. Dies führt zu einer Verringerung des Druckabfalls in der Entgasungsöffnung 5 und somit zu einer besseren Entgasung der Formmasse.

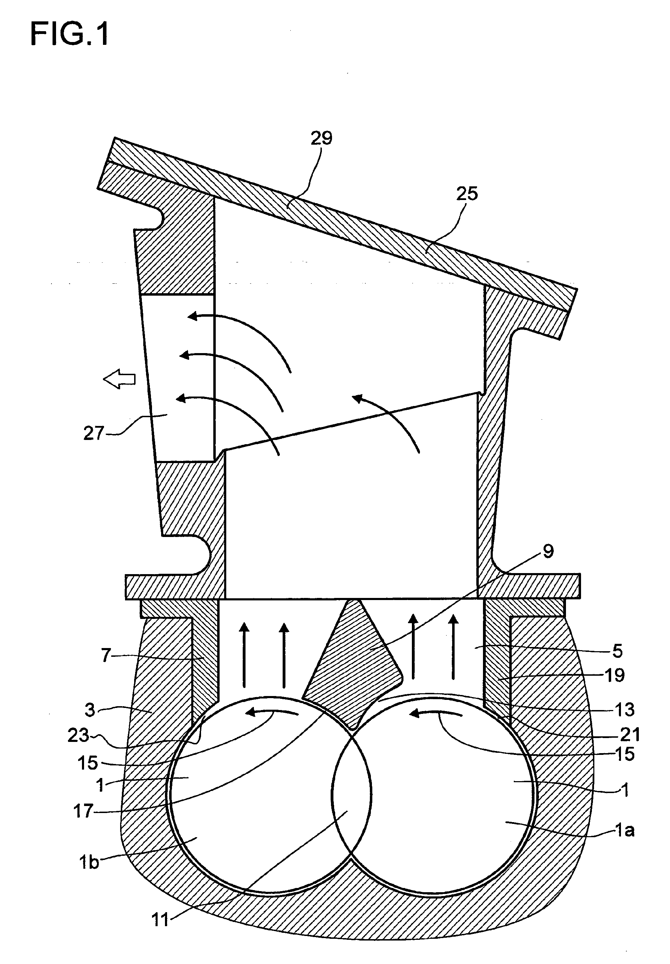

In der in Figur 1 dargestellten Ausführungsform ist die Entgasungsöffnung 5 von einem Dom 25 abgedeckt. Im Dom 25 wird der Gasstrom zu einer Auslassöffnung 27 umgelenkt. Die Auslassöffnung 27 kann zum Beispiel mit einem Abgaskanal verbunden sein. Dies ist insbesondere dann vorteilhaft, wenn neben Wasserdampf auch Lösungsmittel und gegebenenfalls Monomerreste aus der Formmasse austreten. Ein Vorteil der Umlenkung des Gasstromes liegt darin, dass Teile der Formmasse, die mit dem Gasstrom mitgerissen werden, zunächst nach oben gerissen werden, gegebenenfalls gegen den Deckel 29 des Domes prallen und daraufhin in die Entgasungsöffnung 5 zurückfallen oder an Deckel und Wänden haften bleiben.

Bei der erfindungsgemäßen Ausbildung der Entgasungsöffnung 5 werden aufgrund des größeren freien Querschnitts nur wenige Teilchen mitgerissen, was sich in hohen Standzeiten zwischen notwendigen Reinigungsgängen widerspiegelt.

### Beispiel

In einen Zweischneckenextruder ZSK 133 der Fa. Coperion W&P werden in die Zufuhröffnung 2 t/h feuchter ABS-Kautschuk mit einem Wassergehalt von 30 Gew.-% eindosiert. Die Maschine umfasst zwei Abquetschzonen, wie sie in der WO 98/13412 beschrieben sind, in denen das Wasser zu etwa 50% durch Anwendung von mechanischem Druck weitgehend flüssig entfernt wird. Nach diesen Abquetschzonen folgt über eine Schmelzeleitung die Zufuhr von 1500 kg/h SAN-Schmelze unter intensiver Vermischung der Schmelze mit dem noch feuchten Kautschuk, wobei das restliche Wasser verdampft wird. Der dabei entstehende Wasserdampf entweicht durch eine Entgasungsöffnung. Tabelle 1 zeigt die Standzeiten einmal für eine Abdeckung der Entgasungsöffnung mit einem Standardeinsatz Typ B und einmal mit einem erfindungsgemäßen Einsatz mit Steg. Als Gasgeschwindigkeit wird die Strömungsgeschwindigkeit des austretenden Brüden am engsten freien Querschnitt der Entgasungsöffnung bezeichnet und die Standzeit beschreibt den Zeitraum zwischen 2 für den sicheren Betrieb notwendigen Reinigungsabläufen mit Maschinenstillstand.

**Tabelle 1**

| Einsatz | Gasgeschwindigkeit | Standzeit |
|---|---|---|
| Typ B | ca. 35 m/s | 2 Tage |
| erfindungsgemäß | ca. 25 m/s | > 3 Wochen |

### Bezugszeichenliste

- 1: Schnecke
- 1a: Schnecke, die zum Steg 9 hin rotiert
- 1b: Schnecke, die von Steg 9 weg rotiert
- 3: Gehäuse
- 5: Entgasungsöffnung
- 7: Entgasungseinsatz
- 9: Steg
- 11: Eingreifbereich
- 13: Spalt mit abnehmender Spaltweite
- 15: Rotationsrichtung
- 17: Spalt mit konstanter Spaltweite
- 19: Rahmen
- 21: Spalt mit konstanter Spaltweite
- 23: Spalt mit abnehmender Spaltweite
- 25: Dom
- 27: Auslassöffnung
- 29: Deckel

## Patentansprüche

1. Vorrichtung zum Extrudieren von Formmassen mit mindestens zwei in einem Gehäuse (3) aufgenommenen Schnecken (1, 1a, 1 b), umfassend mindestens eine Einzugszone, eine Umwandlungszone und eine Austragszone, wobei sich die Zonen zumindest teilweise überdecken können, sowie mindestens eine Entgasungsöffnung (5), **dadurch gekennzeichnet, dass** die Entgasungsöffnung (5) einen Teilbereich im Gehäuse (3) über mindestens zwei ineinander eingreifenden Schnecken (1 a, 1b) ausspart und jeweils im Eingreifbereich (11) der Schnecken (1a, 1 b) ein Steg (9) in der Entgasungsöffnung (5) ausgebildet ist, so dass durch den Steg (9) über jeder der Schnecken (1, 1 a, 1 b) eine Entgasungsöffnung freigegeben wird, wobei zwischen der mindestens einen Schnecke (1a), die im Bereich der Entgasungsöffnung (5) in Richtung zum Steg (9) hin rotiert, und dem Steg (9) ein Spalt (13) ausgebildet ist, dessen Spaltweite in Rotationsrichtung der Schnecke (1a) abnimmt.

2. Vorrichtung gemäß Anspruch 1, **dadurch gekennzeichnet, dass** zwischen dem Steg (9) und einer Schnecke (1b), die im Bereich der Entgasungsöffnung (5) vom Steg (9) weg rotiert, ein Spalt (17) mit einer konstanten Spaltweite ausgebildet ist.

3. Vorrichtung gemäß Anspruch 1, **dadurch gekennzeichnet, dass** der Steg (9) auf der Seite mit abnehmender Spaltweite mindestens 30 % der Schnecke überdeckt.

4. Vorrichtung gemäß Anspruch 1 oder 3, **dadurch gekennzeichnet, dass** bei gegensinnig rotierenden Schnecken (1), die im Bereich der Entgasungsöffnung (5) jeweils in Richtung zum Steg (9) hin rotieren, der Steg (9) symmetrisch mit jeweils abnehmender Spaltweite (13) zur Stegmitte hin ausgebildet ist.

5. Vorrichtung gemäß einem der Ansprüche 1 bis 3, **dadurch gekennzeichnet, dass** bei gleichsinnig rotierenden Schnecken (1a, 1b) am Randbereich der Entgasungsöffnung (5) im Bereich der Schnecke (1 b), die zum Randbereich der Entgasungsöffnung (5) hin rotiert, ein Spalt (23) ausgebildet ist, dessen Spaltweite in Rotationsrichtung der Schnecke (1b) abnimmt.

6. Vorrichtung gemäß einem der Ansprüche 1 bis 5, **dadurch gekennzeichnet, dass** die Breite des Steges (9) nach außen hin abnimmt, so dass der Öffnungsquerschnitt der Entgasungsöffnung (5) zunimmt.

7. Vorrichtung gemäß einem der Ansprüche 1 bis 6, **dadurch gekennzeichnet, dass** der Randbereich der Entgasungsöffnung (5) im Bereich der Schnecke (1a), die vom Randbereich weg rotiert, mit einer konstanten Spaltweite ausgebildet ist.

8. Vorrichtung gemäß einem der Ansprüche 1 bis 6, **dadurch gekennzeichnet, dass** die Entgasungsöffnung durch einen Dom (25) abgedeckt ist.

9. Vorrichtung gemäß einem der Ansprüche 1 bis 8, **dadurch gekennzeichnet, dass** der Steg (9) eine Oberfläche aus Polytetrafluorethylen, fluoriertem Polyethylen, Polyetheretherketon (PEEK), Polysulfon oder einer korrosionsfesten Metalllegierung aufweist.

10. Vorrichtung gemäß Anspruch 9, **dadurch gekennzeichnet, dass** das Material für die Oberfläche des Steges (9) als Beschichtung aufgebracht ist.

## Claims

1. An apparatus for the extrusion of molding compositions with at least two screws (1, 1a, 1b) mounted within a barrel (3), comprising at least one feed zone, one transition zone, and one metering zone, where the zones can have at least some mutual overlap, and also at least one vent (5), wherein the vent (5) is a cut-out portion of a region in the barrel (3) above at least two intermeshing screws (1a, 1 b) and in each case in the intermeshing region (11) of the screws (1a, 1 b) there is a fillet (9) in the vent (5), so that the fillet (9) above each of the screws (1, 1 a, 1b) provides an uncovered vent, and between the fillet (9) and the at least one screw (1a) which rotates in the region of the vent (5) in the direction toward the fillet (9) there is a gap (13) whose gap width decreases in the direction of rotation of the screw (1 a).

2. The apparatus according to claim 1, wherein between the fillet (9) and a screw (1 b) which rotates in the region of the vent (5) in the direction away from the fillet (9), there is a gap (17) with constant gap width.

3. The apparatus according to claim 1, wherein the fillet (9) covers at least 30% of the screw on the side with decreasing gap width.

4. The apparatus according to claim 1 or 3, wherein, in the case of counter-rotating screws (1), each of which, in the region of the vent (5), rotates in the direction toward the fillet (9), the fillet (9) is symmetrical, with gap width (13) decreasing in each case in the direction toward the center of the fillet.

5. The apparatus according to any of claims 1 to 3, wherein, in the case of corotating screws (1 a, 1 b) there is, at the periphery of the vent (5) in the region of the screw (1b) which rotates in the direction toward the periphery of the vent (5), a gap (23) whose gap width decreases in the direction of rotation of the screw (1b).

6. The apparatus according to any of claims 1 to 5, wherein the width of the fillet (9) decreases in the outward direction, and the cross section of the opening of the vent (5) therefore increases.

7. The apparatus according to any of claims 1 to 6, wherein the periphery of the vent (5) in the region of the screw (1a) which rotates in the direction away from the periphery has constant gap width.

8. The apparatus according to any of claims 1 to 6, wherein the vent has been covered by a dome (25).

9. The apparatus according to any of claims 1 to 8, wherein the fillet (9) has a surface composed of polytetrafluoroethylene, of fluorinated polyethylene, of polyetheretherketone (PEEK), of polysulfone, or of a corrosion-resistant metal alloy.

10. The apparatus according to claim 9, wherein the material for the surface of the fillet (9) has been applied in the form of a coating.

## Revendications

1. Dispositif pour extruder des matières de moulage avec au moins deux vis sans fin (1, 1a, 1b) logées dans un boîtier (3), comprenant au moins une zone d'entrée, une zone de conversion et une zone d'extraction, les zones pouvant se recouvrir au moins partiellement, ainsi qu'au moins une ouverture de dégazage (5), **caractérisé en ce que** la zone de dégazage (5) évide une région partielle dans le boîtier (3) au-dessus d'au moins deux vis sans fin (1a, 1b) en prise l'une avec l'autre et une nervure (9) est formée dans l'ouverture de dégazage (5) respectivement dans la zone de prise (11) des vis sans fin (1a, 1b), de telle manière qu'une ouverture de dégazage soit libérée par la nervure (9) au-dessus de chacune des vis sans fin (1a, 1b), dans lequel, entre ladite au moins une vis sans fin (1a), qui tourne en direction de la nervure (9) dans la région de l'ouverture de dégazage (5), et la nervure (9), il se forme une fente (13), dont la largeur de fente diminue dans le sens de rotation de la vis sans fin (1a).

2. Dispositif selon la revendication 1, **caractérisé en ce qu'**une fente (17) de largeur de fente constante est formée entre la nervure (9) et une vis sans fin (1b), qui tourne en s'éloignant de la nervure (9) dans la région de l'ouverture de dégazage (5).

3. Dispositif selon la revendication 1, **caractérisé en ce que** la nervure (9) recouvre au moins 30 % de la vis sans fin sur le côté où la largeur de fente diminue.

4. Dispositif selon la revendication 1 ou 3, **caractérisé en ce que**, avec des vis sans fin (1) tournant en sens inverse, qui tournent respectivement en direction de la nervure (9) dans la région de l'ouverture de dégazage (5), la nervure (9) est de forme symétrique avec une largeur de fente (13) diminuant respectivement en direction du milieu de la nervure.

5. Dispositif selon l'une quelconque des revendications 1 à 3, **caractérisé en ce que**, avec des vis sans fin (1a, 1b) tournant dans le même sens, il se forme dans la région de bord de l'ouverture de dégazage (5), dans la région de la vis sans fin (1b) qui tourne en direction de la région du bord de l'ouverture de dégazage (5), une fente (23) dont la largeur de fente diminue dans le sens de rotation de la vis sans fin (1b).

6. Dispositif selon l'une quelconque des revendications 1 à 5, **caractérisé en ce que** la largeur de la nervure (9) diminue en direction de l'extérieur, de telle manière que la section transversale d'ouverture de l'ouverture de dégazage (5) augmente.

7. Dispositif selon l'une quelconque des revendications 1 à 6, **caractérisé en ce que** la région de bord de l'ouverture de dégazage (5) dans la région de la vis sans fin (1a), qui tourne en s'éloignant de la région de bord, est formée avec une largeur de fente constante.

8. Dispositif selon l'une quelconque des revendications 1 à 6, **caractérisé en ce que** l'ouverture de dégazage est recouverte par un dôme (25).

9. Dispositif selon l'une quelconque des revendications 1 à 8, **caractérisé en ce que** la nervure (9) présente une surface en polytétrafluoroéthylène, en polyéthylène fluoré, en polyétheréthercétone (PEEK), en polysulfone ou en un alliage métallique résistant à la corrosion.

10. Dispositif selon la revendication 9, **caractérisé en ce que** le matériau pour former la surface de la nervure (9) est déposé sous forme de revêtement.
